# EUROPEAN PATENT SPECIFICATION

(11) **EP 1 118 813 B1**
(45) Date of publication and mention of the grant of the patent: **08.10.2008**
(21) Application number: 00123045.7
(22) Date of filing: 24.10.2000
(51) Int. Cl.: F21S 8/10, F21V 7/00, F21W 101/14, F21Y 101/02

(54) **Automobile signal lamp**
Signalleuchte für Kraftfahrzeuge
Feu de signalisation pour véhicule automobile

(30) Priority: 21.01.2000 JP 2000013239
(43) Date of publication of application: 25.07.2001
(73) Proprietor: Stanley Electric Co., Ltd., Meguro-ku Tokyo (JP)
(72) Inventor: Kondo, Toshiyuki, Tokyo (JP); Okada, Hidetaka, Tokyo (JP)
(74) Representative: Leitner, Waldemar

(56) References cited:
- WO-A-99/09349
- US-A- 5 582 480
- US-A- 5 639 153
- US-A- 5 707 130

## Description

### BACKGROUND OF THE INVENTION

### 1. Field of the invention

The present invention concerns an automobile signal lamp, comprising at least one light emitting unit including a light source whose main light emitting direction substantially agrees with the irradiation axis of the automobile signal lamp, a first reflecting surface corresponding to at least irradiation direction side half of a parabolic reflecting surface, and a second reflecting surface separated from said irradiation axis by a convenient distance respectively in the reflection direction of said first reflecting surface, disposed radially not to interfere each other, and reflecting light from said first reflecting surface in a direction parallel to said irradiation axis. Such automobile signal lamps may be used as tail lamp, stop lamp or the like.

WO 99/09349 discloses a lamp according to the preamble of claim 1, with a conventional bireflective lens element directing a first portion of input light of a light source through the lens element in a first predetermined pattern and redirecting a second portion of input light by a primary reflecting area and a secondary reflecting area in order to create uniform illumination. The primary reflecting area has a curved or cone shaped surface and the secondary reflecting area includes a plurality of concentric facets annularly surrounding the primary reflecting area. However, since one annular facet is disposed behind the other, in order to illuminate all of them, a facet being disposed radially outwardly is positioned on a higher level than one being closer to the centre. Therefore, due to this step-like configuration the lens element has the disadvantage of a large height.

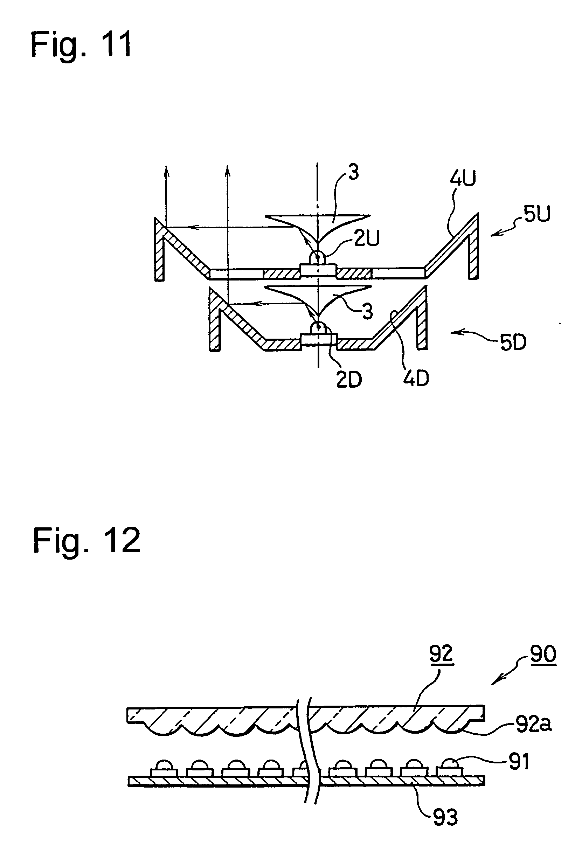

Fig. 12 shows another example of composition of conventional this kind of automobile signal lamp 90 wherein an LED lamp is adopted as light source 91 and, as said LED lamp is relatively restricted in its irradiation angle to about 40 to 60 degrees, a plurality of them are adopted to glitter the whole surface of a lens 92.

Said light source 91 is disposed in matrix on a print circuit board 93 and a lens cut 92 imparting a desired light distribution characteristic as tail lamp or the like to the light from the light source 91 is disposed on the surface of said lens 92 respectively corresponding to the respective position where said light source 91 is installed.

### SUMMARY OF THE INVENTION

However, in the automobile signal lamp 90 of the aforementioned conventional composition, the number of light source 91 is set giving priority to glitter the whole surface of the lens 92, than the required brightness as tail lamp or the like, as it is obvious from the previous description, an excessive number is adopted as for the illuminance, and more than necessary electricity is consumed, namely the efficiency is low.

Moreover, said lens cut 92a corresponds to the position where the light source 91 is disposed, and as the light source 91 is disposed matrix on a print circuit board 93, its arrangement is limited to matrix form or the like. As the result, the disposition of the lens cut 92 is also restricted, variations are not abundant, the lens 92 surface design becomes monotone, and becomes poor in designing.
The present invention intends to solve the aforementioned conventional problems.

It is therefore an object of the invention to provide an automobile signal lamp allowing to supply design variations and to reduce the power consumption of said automobile signal lamp.

This is achieved by the features of claim 1. An automobile signal lamp is provided wherein said parabolic reflecting surface is obtained by rotating around said irradiation axis a parabola taking said light source as focal point, and a direction orthogonal to said irradiation axis of the automobile signal lamp as central line, and wherein a range of 360 degrees irradiated by the light from said first reflecting surface is divided into radial convenient divisions, a small reflecting surface is disposed in each division changing distance from the optical axis, and the second reflecting surface is composed by synthesizing these small reflecting surfaces.

### BRIEF DESCRIPTION OF THE DRAWINGS

- Fig. 1: is a front view showing a first light emitting unit portion;
- Fig. 2: is a cross section along the line A-A of Fig. 1;
- Fig. 3: is an illustrative drawing showing a composition of the light emitting unit of the same first embodiment;
- Fig. 4: is a perspective view showing a state of use of the same automobile signal lamp;
- Fig. 5: is a cross section showing a portion of light emitting unit, essential part of the same automobile signal lamp;
- Fig. 6: is a cross section showing a second embodiment of an automobile signal lamp according also to the present invention by its essential part;
- Fig. 7: is a cross section showing a third embodiment of an automobile signal lamp; this third embodiment does not form a part of the claimed invention;
- Fig. 8: is a front view of the same third embodiment;
- Fig. 9: is a cross section showing a fourth embodiment of an automobile signal lamp; this fourth embodiment does not form a part of the claimed invention;
- Fig. 10: is a cross section showing a variant of the same fourth embodiment by its essential part;
- Fig. 11: is a cross section showing a fifth embodiment of an automobile signal lamp; this fifth embodiment does not form a part of the invention; and
- Fig. 12: is a cross section showing a conventional example.

### DETAILED DESCRIPTION OF THE PREFERRED EMBODIMENTS

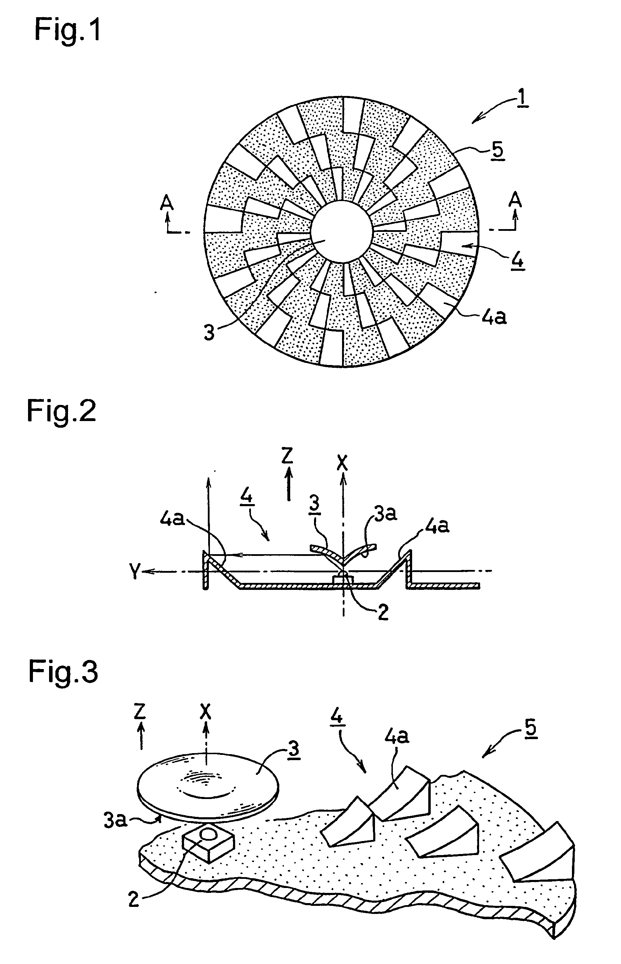

Now the present invention will be described in detail based on embodiments shown in drawings. A first embodiment of automobile signal lamp according to the present invention is indicated by a symbol 1 in Fig. 1 to Fig. 4 and in this embodiment also, an LED lamp relatively narrow in irradiation angle is adopted as the light source, and as for the composition of a conventional example, an example wherein more than necessary number of light source 2 is required for assuring the brightness.

In the present invention also, is installed by agreeing the optical axis X, its main light emitting direction, with the irradiation axis Z of an automobile signal lamp 1, its front (irradiation axis Z direction) is covered with a first reflecting surface 3, and light from said light source 2 is never irradiated directly in the irradiation direction of this automobile signal lamp 1.

A parabola taking said light source 2 as focal point appears in a cross section of said first reflecting surface 3 agreeing with said optical axis X, ant at this moment, the central axis Y of said parabola is orthogonal to the optical axis X of said light of source 2. In other words, it is also orthogonal to the irradiation axis of this automobile signal lamp 1.

Said parabola is rotated around the optical axis X of said light source 2 to form a parabolic reflecting surface 3a (3b). At this moment, in the vicinity of the optical axis X, as the portion in the proximity of the parabolic apex forms a closed space surrounding the periphery of the light source 2, this portion is excluded to let the light from the light source 2 radiate outside.

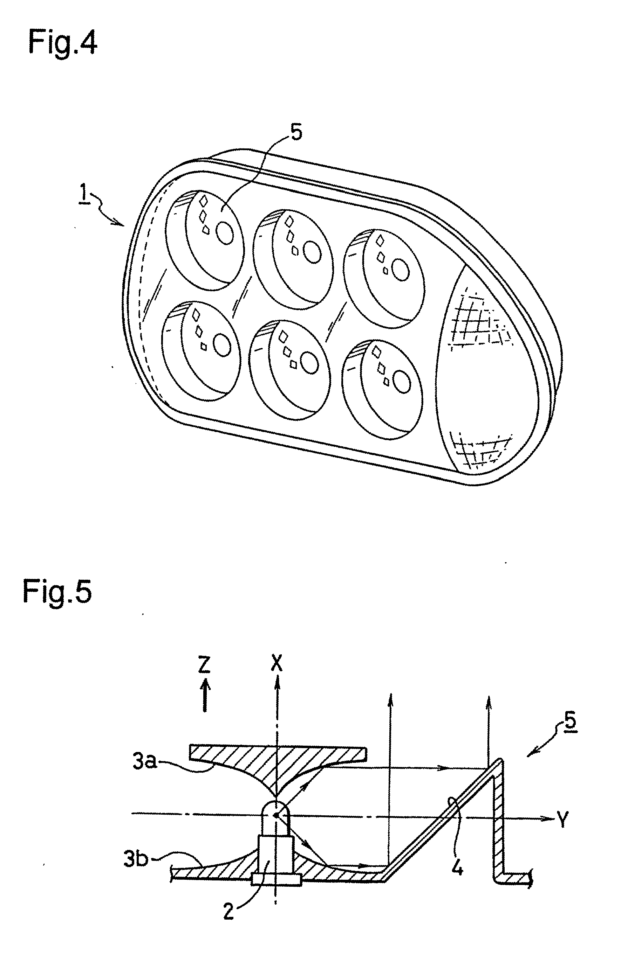

The design of said parabolic reflecting surface 3a can be modified conveniently according to said light source 2 characteristics. For example, if said light source 2 radiates light only forward as LED lamp, only forward side 3a of two parabolic reflecting surface 3a, 3b (refer to Fig. 5 too) appearing forward and backward in the irradiation direction of the automobile signal lamp 1 may be selected.

When the light source 2 is the one radiating light with an uniform intensity approximately all around its circumference as an incandescent lamp, said parabolic reflecting surface 3a may be enough; however, if a parabolic reflecting surface 3b appearing backward in the irradiation direction is also adopted as first reflecting surface 3 (Fig. 5), light utilization factor of the light source 2 will increase and a further brighter automobile signal lamp 1 can be realized.

By setting a first reflecting surface 3 as mentioned above, light from the light source 2 is reflected by the parabolic reflecting surface 3a and then reflected in a direction parallel to the parabola central axis Y. At this moment, as said parabolic reflecting surface 3a rotates about the optical axis X, the reflected light is generated radially around the optical axis X.

In the present invention a second reflecting surface 4 is prepared in addition to said first reflecting surface 3, this second reflecting surface 3 is disposed in the optical path of the light reflected from said first reflecting surface 3 and reflects this light in a direction parallel to the irradiation axis Z of the automobile signal lamp 1. At this moment, said second reflecting surface 4 may be disposed in an annular form at an equidistant position from the optical axis X.

As shown in Fig. 1 and Fig. 3, a range of 360 degrees irradiated by the light from said first reflecting surface 3 may be divided into radial convenient divisions, a small reflecting surface 4a disposed in each division changing distance from the optical axis X, and the second reflecting surface 4a composed by synthesizing these small reflecting surfaces 4a. If this small reflecting surface 4a is adopted, by devising the small reflecting surface 4a disposition state, designing variation such as star shape can be imparted to the light emission pattern. Moreover, it is free to diffuse the reflected light by making the reflecting surface shape of the small reflecting surface 4a convex, concave, undulated or other convenient curved surface.

The light emitting unit 5 is composed of the light source 2, the first reflecting surface 3 and the second reflecting surface 4 described above, and the automobile signal lamp 1 of the present invention is composed by assembling at least one or more this light emitting unit 5 as shown in Fig. 4 (the drawing shows an example wherein the automobile signal lamp 1 is composed by assembling six light emitting units 5).

Therefore, if the mounting direction of said light emitting unit 5 to said automobile signal lamp 1 is known, the reflected light from the small reflecting surface 4a will satisfy as it is the light distribution characteristics as tail lamp or the like of the automobile signal lamp 1, by imparting to said small reflecting surface 4a a reflecting surface shape that would diffuse the reflected light in a broad angle in the horizontal direction, and diffuse the reflected light in a not so broad angle in the vertical direction.

Next, the function and effect of the automobile signal lamp 1 of the present invention having the aforementioned composition. As the present invention diverges once the light from the light source 2 in the horizontal direction in respect of the optical axis X by the first reflecting surface 3 and then directs to the irradiation direction by the second reflecting surface 4, the light emitting area of the light emitting unit 5 can be set freely.

This allows to set arbitrarily the number of light source 2 to be arranged in the automobile signal lamp 1 and, in other words, the brightness of the automobile signal lamp 1 can be optimized by optimizing the light emitting area of said light emitting unit 5, and unnecessary brightness and power consumption due to the light emission from all aver the light emitting surface of the automobile signal lamp 1 encountered in the prior art can be prevented. In addition, the light emitting shape of the light emitting unit 5 can be set arbitrarily by the combination of small reflecting surface 4a, the light emitting surface of the automobile signal lamp 1 can be designed more freely.

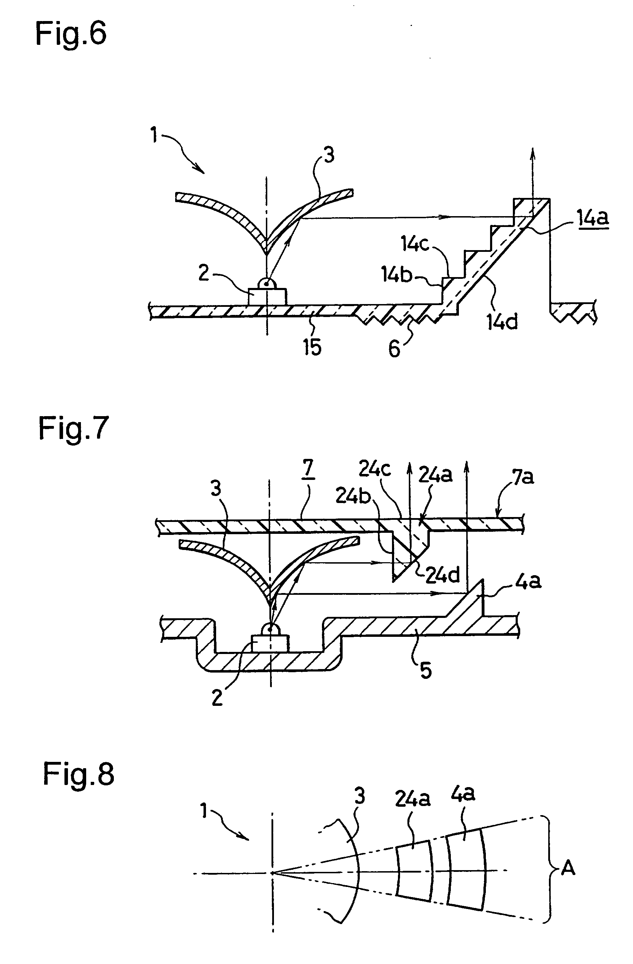

Fig. 6 shows the essential parts of the second embodiment of the present invention, and this second embodiment concerns principally the composition of the second reflecting surface. In the aforementioned first embodiment, the second reflecting surface 4 was formed as a mirror surface reflecting totally the light from the first reflecting surface by depositing aluminum on a basically opaque member (possibly transparent member) ; however, the light emitting unit 15 may be formed with a high refractive transparent member having the refractive index higher than unit such as transparent resin.

In this case, it is well formed in an approximately rectangular prism shape whose incident surface 15b directed to the light source is approximately orthogonal to the light from the first reflecting surface 3, output surface 14c is approximately orthogonal to the irradiation direction, and back surface 14d is set to an angle of total internal reflection by the difference of refractive index in respect with the atmosphere to the light incident from the incident surface 15b, at a position corresponding to the small reflecting surface 4a of the light emitting unit 5.

Here, as mentioned for the first embodiment, the output surface 14c can be formed arbitrarily into concave, convex, undulated or other convenient curbed surface to perform the diffusion. Besides, in this second embodiment, using the fact that the light emitting unit 15 is made of transparent resin member, the reflex reflector 6 may be formed on the total or partial area except for the position where said small reflecting surface 4a is installed.

Fig. 7 to Fig. 8 show a third embodiment not being part of the present invention. In the aforementioned second embodiment, the second reflecting surface 14 (small reflecting surface 14a) was formed using transparent resin member. Now, the observation of this kind of automobile signal lamp 1 teaches that the light emitting surface is covered with a lens 7 made of transparent resin member for most of them.

Therefore, in this third embodiment, an incident surface 24b having a composition similar to the small reflecting surface 14a of the second embodiment, and a small reflecting surface 24a having a back surface 24d are disposed on a lens. However, in this case, the output surface 24c is common with the lens 7 surface 7a. Besides, this surface 7a can be formed arbitrarily into concave, convex, undulated or other convenient curbed surface. Moreover, though not shown, the reflex reflector 6 (refer to Fig. 6) may be disposed at the position except for where said small reflecting surface 24a is installed.

Also, in this third embodiment, a light emitting unit 5 provided with a small reflecting surface 4a similar to the one described for the first embodiment at the back of said lens 7, to obtain irradiation light form both small reflecting surface 4a, 24a as a lamp.

In such composition, if light near the lens 7 in the reflected light from said first reflecting surface 3 is reflected by the small reflecting surface 24a, and light near the light emitting unit 5 is reflected by the small reflecting surface 4a to realize the sharing, the one will not shield the other, and as shown in Fig. 8, it becomes possible to emit the light at the overlapped two point in the same division A which is fan-shaped from the light source 2.

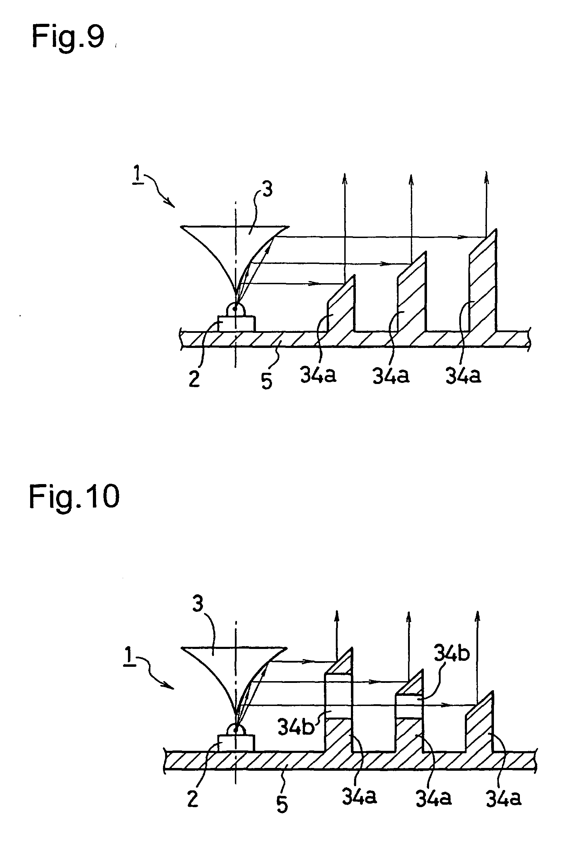

Fig. 9 and Fig. 10 show the fourth embodiment not being part of the present invention, and light emission from two overlapped points within the aforementioned same division is very effective to improve the appearance of the automobile signal lamp 1 as the light emitting area seems to be increased. Therefore, this fourth embodiment intends to increase the light emitting area even when only the light emitting unit 5 is installed, for example.

In order to achieve the aforementioned object, this fourth embodiment allows to obtain a plurality of light emitting places at the overlapped place even in the same division A. Though, in Fig. 9, the height of small reflecting surface 34a is higher as it is more remote from the first reflecting surface 3, however, a tunnel shape opening 34b may be disposed at the small reflecting surface 34a near the first reflecting surface 3 as shown in Fig. 10, for supplying light to the following small reflecting surface 34a.

Fig. 11 shows a fifth embodiment of the automobile signal lamp 1 not being part of the present invention. In the aforementioned embodiment, if the automobile signal lamp 1 is composed of a plurality of light emitting units 5, respective light emitting units 5 are arranged not to be overlapped. However, they can be used in overlapped multiple rows.

In this case, if a second reflecting surface 4D of a lower light emitting unit 5D and a second reflecting surface 4U of a upper light emitting unit 5U are set in a position not to overlap in the vertical direction, the light from the lower light emitting unit 5D will not be shielded and can be directed to the irradiation direction. Obviously, they may be overlapped in two or more rows.

In the foregoing, it has been described supposing that the light source 2D of the lower light emitting unit 5D and the light source 2U of the upper light emitting unit 5U are turned on at the same time; however, in this embodiment, it is not necessary that they light up simultaneously, so for an automobile signal lamp 1 used commonly as tail lamp and stop lamp, only one row is turned on to use as tail lamp, and a plurality of rows are turned on simultaneously to use as stop lamp, and the brightness can be switched over.

Also, in this embodiment, for example, if a light emitting unit 5 using a light source 2 emitting red light color and a light emitting unit 5 using a light source 2 emitting amber light color are overlapped, and if they can be turned on or off selectively, they may be commonly used as tail lamp and turn signal lamp.

As described above, the automobile signal lamp of the present invention, comprising at least one light emitting unit including a light source whose main light emitting direction substantially agrees with the irradiation axis of the automobile signal lamp, a first reflecting surface corresponding to at least irradiation direction side half of a parabolic reflecting surface obtained by rotating around said irradiation axis a parabola taking said light source as focal point, and a direction orthogonal to said irradiation axis of the automobile signal lamp as central line, and a second reflecting surface separated from said irradiation axis by a convenient distance respectively in the reflection direction of said first reflecting surface, disposed radially not to interfere each other, and reflecting light from said first reflecting surface in a direction parallel to said irradiation axis, first, makes the light emitting unit free to set the light emitting area, by diverging once the light from the light source in the horizontal direction in respect of the optical axis by the first reflecting surface and then directing it to the irradiation direction by the second reflecting surface, thereby optimizing the number of light source to be installed in the automobile signal lamp, and providing an excellent effect to reduce the power consumption.

Second, it becomes possible to impart a not conventional and novel aspect to the automobile signal lamp through the arrangement of second reflecting surface and small reflecting surface or the selection of number of overlapped rows, contributing considerably to the design improvement of this kind of automobile signal lamp. In addition, brightness changeover, emitting light color changeover or the like are also made available, improving effectively its universality.

## Claims

1. An automobile signal lamp, comprising at least one light emitting unit (5) including a light source (2) whose main light emitting direction substantially agrees with the irradiation axis (X) of the automobile signal lamp (1), a first reflecting surface (3) corresponding to at least irradiation direction side half of a parabolic reflecting surface (3a, 3b), and a second reflecting surface (4) separated from said irradiation axis (X) by a convenient distance respectively in the reflection direction of said first reflecting surface (3), disposed radially not to interfere each other, and reflecting light from said first reflecting surface (3) in a direction parallel to said irradiation axis (X), said parabolic reflecting surface (3) being obtained by rotating around said irradiation axis a parabola taking said light source (2) as focal point and a direction orthogonal to said irradiation axis of the automobile signal lamp (1) as,central line, and the light from said light source (2) being never irradiated directly in the irradiation direction (Z) of the lamp, as it is covered with the first reflecting surface (3), and a range of 360 degrees irradiated by the light from said first reflecting surface (3) being divided circumferentially into radially extending convenient divisions, **characterized by** a single small reflecting surface (4a) being disposed in each division, these small reflecting surfaces (4a) of these divisions are being arranged at changing distances from the irradiation axis (X), so that these small reflecting surfaces (4a) do not interfere each other in the reflection direction from the center of the first reflecting surface (3) and the second reflecting surface (4) is composed by synthesizing these small reflecting surfaces (4a).

2. The automobile signal lamp of claim 1, **characterized in that** said second reflecting surface (4) is formed as either a reflecting surface using the inner surface total reflection effect generated at the contact surface of high refractivity transparent member with the atmosphere, or a reflecting surface (4) using the total reflection effect by a mirror surface, or a combination of both reflecting surfaces.

3. The automobile signal lamp of claim 1 or claim 2, **characterized in that** said second reflecting surface (4) is formed by combining convenient curved surfaces, and has a dispersion function to the reflected light from said first reflecting surface.

## Patentansprüche

1. Eine Signalleuchte für Kraftfahrzeuge, enthaltend wenigstens eine lichtemittierende Einheit (5) mit einer Lichtquelle (2), deren Hauptlichtemissionsrichtung im wesentlichen mit der Strahlungsachse (X) der Signalleuchte für Kraftfahrzeuge (1) zusammenfällt, eine erste reflektierende Fläche (3), welche wenigstens auf der Strahlungsrichtungsseite einer Hälfte einer parabolischen reflektierenden Oberfläche (3, 3b) entspricht, und eine zweite reflektierende Fläche (4), die von der Strahlungsachse (X) mit einem passenden Abstand in der Reflektionsrichtung der ersten reflektierenden Fläche (3) beabstandet ist, welche radial derart angeordnet sind, dass sie sich einander nicht stören, und welche Licht von der ersten reflektierenden Fläche (3) in einer Richtung parallel zur Strahlungsachse (X) reflektiert, wobei die parabolische reflektierende Fläche (3) **dadurch** erhalten wird, indem um die Strahlungsachse eine Parabel mit der Lichtquelle (2) als Focuspunkt rotiert und eine Richtung, die orthogonal zur Strahlungsachse der Signallampe für Kraftfahrzeuge (1) ist, als zentrale Linie aufweist, und das Licht aus der Lichtquelle (2) niemals direkt in die Richtung der Strahlungsrichtung (X) der Lampe abgestrahlt wird, da diese mit der ersten reflektierenden Fläche (3) abgedeckt ist, wobei ein Bereich von 360°, der von dem Licht der ersten reflektierenden Fläche (3) bestrahlt wird, in Umfangsrichtung in sich radial erstreckende, passende Bereiche geteilt ist, **dadurch gekennzeichnet, dass** eine einzelne kleine reflektierende Fläche (4a) in jedem Bereich angeordnet ist, dass diese kleine reflektierenden Flächen (4a) dieser Bereiche in wechselnden Abständen von der Strahlungsachse (X) angeordnet sind, sodass die kleinen reflektierenden Flächen (4a) sich nicht in der Reflektionsrichtung vom Zentrum der ersten reflektierenden Fläche (3) stören und die zweite reflektierende Fläche (4) durch eine Synthese dieser reflektierenden Oberflächen (4a) ausgebildet ist.

2. Eine Signallampe für Kraftfahrzeuge nach Anspruch 1, **dadurch gekennzeichnet, dass** die zweite reflektierende Fläche (4) entweder als eine reflektierende Fläche, welche einen inneren Totalreflektionseffekt, der durch die Grenzfläche eines hochreflektierenden transparenten Teils mit der Atmosphäre gebildet wird, ausnutzt, oder als eine reflektierende Fläche, welche den Totalreflektionseffekt einer Spiegelfläche verwendet, oder als eine Kombination beider reflektierenden Flächen ausgebildet ist.

3. Die Signallampe für Kraftfahrzeuge nach einem Anspruch 1 oder 2, **dadurch gekennzeichnet, dass** die zweite reflektierende Fläche (4) **dadurch** ausgebildet ist, indem passend gekrümmte Flächen kombiniert werden, und dass sie eine Dispersionsfunktion für das reflektierte Licht von der ersten reflektierenden Fläche besitzt.

## Revendications

1. Feu de signalisation pour automobile, comprenant au moins une unité d'émission de lumière (5) comprenant une source de lumière (2) dont la direction d'émission de lumière principale s'accorde sensiblement avec l'axe de rayonnement (X) du feu de signalisation (1) pour automobile, une première surface réfléchissante (3) correspondant au moins à la moitié du coté dans la direction de rayonnement d'une surface réfléchissante parabolique (3a, 3b), et une seconde surface réfléchissante (4) séparée dudit axe de rayonnement (X) par une distance appropriée respectivement dans la direction de réflexion de ladite première surface réfléchissante (3), disposée radialement pour ne pas interférer entre elles, et la lumière réfléchissante provenant de ladite première surface réfléchissante (3) dans une direction parallèle audit axe de rayonnement (X), ladite surface réfléchissante parabolique (3) étant obtenue en faisant tourner autour dudit axe de rayonnement, une parabole prenant ladite source de lumière (2) comme un point focal et une direction orthogonale audit axe de rayonnement du feu de signalisation (1) pour automobile en tant qu'axe central, et la lumière provenant de ladite source de lumière (2) n'étant jamais rayonnée directement dans la direction de rayonnement (Z) de la lampe, étant donné qu'elle est couverte par la première surface réfléchissante (3), et une plage de 360 degrés rayonnée par la lumière provenant de ladite première surface réfléchissante (3) étant divisée de manière circonférentielle en divisions appropriées s'étendant de manière radiale, **caractérisé par** une seule petite surface réfléchissante (4a) qui est disposée dans chaque division, ces petites surfaces réfléchissantes (4a) de ces divisions sont agencées à des distances de changement par rapport à l'axe de rayonnement (X), de sorte que ces petites surfaces réfléchissantes (4a) n'interfèrent pas entre elles dans la direction de réflexion à partir du centre de la première surface réfléchissante (3) et la seconde surface réfléchissante (4) est composée en synthétisant ces petites surfaces réfléchissantes (4a).

2. Feu de signalisation pour automobile selon la revendication 1, **caractérisé en ce que** ladite seconde surface réfléchissante (4) est formée comme une surface réfléchissante utilisant l'effet de réflexion total de la surface interne généré au niveau de la surface de contact de l'élément transparent très réfractif avec l'atmosphère, ou une surface réfléchissante (4) utilisant l'effet de réflexion total par une surface de miroir, ou une combinaison des deux surfaces réfléchissantes.

3. Feu de signalisation pour automobile selon la revendication 1 ou la revendication 2, **caractérisé en ce que** ladite seconde surface réfléchissante (4) est formée en combinant des surfaces incurvées appropriées, et a une fonction de dispersion de la lumière reflétée provenant de ladite première surface réfléchissante.
